, Europäisches Patentamt

European Patent Office

Office européen des brevets

(19)

(11) Publication number: 0 209 922
B1

(12)

# EUROPEAN PATENT SPECIFICATION

(45) Date of publication of the patent specification:
23.11.89

(51) Int. Cl.⁴: **B23K 15/00**

(21) Application number: 86200848.9

(22) Date of filing: 15.05.86

(54) Process for the connection of at least one pipe to a coupling part, such as a plate or flange.

(30) Priority: 28.05.85  NL 8501518

(43) Date of publication of application:
28.01.87 Bulletin 87/5

(45) Publication of the grant of the patent:
23.11.89 Bulletin 89/47

(84) Designated Contracting States:
BE DE FR GB NL

(56) References cited:
LU-A- 53 401
US-A- 3 949 186

(73) Proprietor: B.V. KONINKLIJKE MAATSCHAPPIJ "DE SCHELDE", Glacisstraat 165 P.O. Box 16, NL-4381 SE Vlissingen(NL)

(72) Inventor: Van der Goes, Jacobus Johannes, Steengrachtstraat 55, NL-4386 AS West-Souburg(NL)

(74) Representative: van der Beek, George Frans, Ir. et al, Nederlandsch Octrooibureau Scheveningseweg 82 P.O. Box 29720, NL-2502 LS 's-Gravenhage(NL)

EP 0 209 922 B1

## Description

The invention relates to a process for the connection by fusion welding of at least one pipe to a coupling part, such as a plate or flange, where each pipe is inserted over a particular length into a matching bore in the coupling part and in which in a vacuum chamber at least one electron beam is passed through the material of the coupling part and of the wall of the inserted pipe part in a direction essentially at right angles to the longitudinal axis of each inserted pipe part.

Such process is disclosed in US Patent 3 949 186.

Up to the present various processes have been developed for welding a pipe to a plate. In one of these known processes one end of a pipe is welded to the wall of the bore or to the outside edge of the bore or a short length of pipe which extends past the bore and is integral with the plate or flange, with a circumferential weld being made by a welding electrode rotating inside the bore. For welding several pipes to a plate or flange this constitutes a fairly time-consuming and complex process, because for each pipe the electrode always has to be placed and set in a different bore.

In order to eliminate these problems, a process was developed in which through extrusion from a plate or flange several pipes are formed simultaneously on this plate or flange. With this method there is a minimum limit as regards the distance between the pipes, said limit being determined by the degree to which during the extrusion process material from the plate can reach the areas situated between the pipes to be extruded, in other words where the pipes are closest together. If the distance between the pipes is too short, there is a chance of the pipe wall becoming too thin here or even disappearing entirely.

The above disadvantages are eliminated by the process according to the present invention, which is characterized in that the electron beam is of an intensity, giving it a penetration depth such that during beam passage at least one complete bore and the inserted pipe is traversed in such a way, that all circumferential adjacent bore wall and pipe, passed through by the beam will fuse with one another, while moving the electron beam mainly transversely with respect to the coupling parts and at least one inserted pipe end.

The previously mentionned US Patent 3 949 186 discloses a method for welding by means of an electron beam a coupling flange to a waveguide tube for the transmission of millimeter waves. Upon welding the tube rotates about its longitudinal axis and the beam is of such intensity, that it fuses together only the pipe outer wall and the coupling flange inner wall at the interface between said metallic parts, producing here a weld bead of such small cross section, that the inner surface of the waveguide tube will not be deformed. This is necessary because a deformed inner surface of the waveguide tube would otherwise deform the travelling waves.

In the method of the present invention the electron beam is of sufficient intensity to weld together in one beam passage transversely to the pipe axis at least one pipe end and the adjacent bore wall over the total pipe circumference. Here the pipe need not rotate about its longitudinal axis, so that the electron beam may weld in one beam passage several, closely positioned pipes (at least four if necessary) to one flange. This is not possible using the method of above US Patent. Here the beam intensity is limited so that the beam cannot melt the inner tube wall.

In the case of the process according to the invention all pipe parts are welded to the plate or flange in one passage of the electron beam through the flange and the inserted pipe parts. Above all, where there are very many pipes on a flange, this is a particular advantage compared with the process in which one welding electrode always has to be moved from one pipe to the next; and the distance between the pipes is no longer important. The pipes can even be placed very close together, which is particularly advantageous for heat exchangers.

In the process according to the invention, with the passage of the electron beam, the area of the plate or flange and the adjacent pipe wall in the path of the beam melts. When the beam is moved this melted material quickly sets again, but in order to prevent this melted material of the pipe wall from flowing into the interior of the pipe, provision can be made according to the invention for a plug of suitable fusible material, for example, of the same material as the pipe and/or the flange, to be pushed into the pipe part for welding at the point where the weld is to be made. Although material of the plug will then also melt, no material from the pipe wall will be able to flow into the inside. After welding, this plug must be removed, for example by drilling out.

The pipes can also be welded to the coupling part, for example plate or flange, by several welds one above the other. This can be carried out by passing several parallel electron beams according to several planes simultaneously or in succession through the material of the coupling part and of each inserted pipe part.

With the process according to the invention the electron beam can be moved relative to the coupling part and the inserted pipe part, but the coupling part with the inserted pipe parts can also be moved relative to the stationary electron beam. Here, the coupling part with the inserted pipe part can, for example, be swivelled or rotated about a point inside the coupling part while the electron beam is stationary. This point of swivel or point of rotation can be outside a pipe, for example in the centre of a number of pipes grouped in a circle.

The process in which the plate or flange is swivelled about a point, has the advantage, for example with pipes grouped in a circle, that all pipes are welded to the plate or flange with practically the same intensity of beam.

If for the use of the coupling part and the pipes welded thereto it is undesirable for a gap to remain open towards the bore between the wall of the bore and the wall of the pipe, provision can be made for an annular recessed shoulder to be formed inside the bore at right angles to the surface of the bore, against which shoulder the head end of the pipe comes to rest when the end of the pipe is inserted into this broader bore part. The electron beam which has to weld the end of the pipe to the material of the plate or flange is then preferably passed through said plate or flange in such a way that the gap between the shoulder part and the head end of the pipe is within the beam, in other words parts of the beam, viewed in transverse section, still lie on either side of the gap and material is thus also melted on either side of the gap. In that case an annular flat weld is formed at the point where the head end of the pipe rested against the shoulder part. There therefore remains no gap which extends into the bore. This process can also, of course, be designed simultaneously for a large number of pipes.

Instead of starting with a round plate or flange, it is also possible to use a flat rectangular plate or flange. During welding, the electron beam will then preferably be passed over one of the flat edges of this flat plate. The energy fed to the weld points will then also remain practically the same. The relative movement between the rectangular flange and the beam will then take place in the direction of the flat edge over which the electron beam is passed. If necessary, this plate can be made into a circle after the welding.

All processes according to the invention have the advantage of a very uniform thickness of the weld. Once the beam parameters such as focussing, current intensity etc. are set, they subsequently do not need to be adjusted.

The invention will now be explained in greater detail with reference to the drawing, in which an example of an embodiment is shown.

Fig. 1 shows a top view of a flange according to the process of the invention, to which four pipes arranged in a circle are welded.

Fig. 2 shows a cross section through the centre line of the flange with pipes from the top view of Fig. 1.

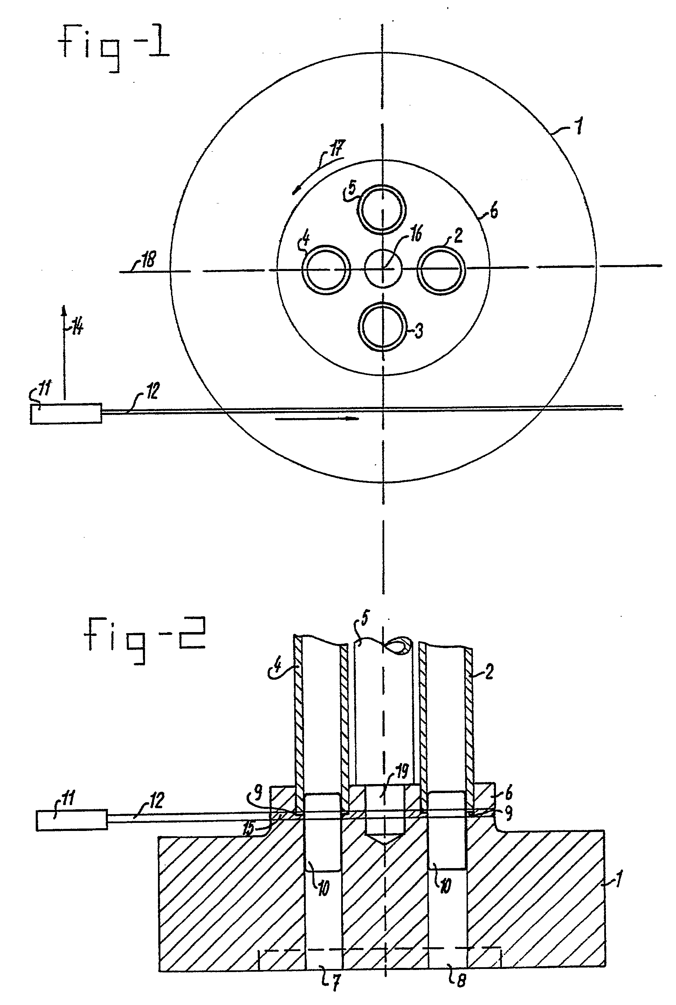

Figs. 1 and 2 show a flange 1 to which four pipes 2, 3, 4 and 5 are welded.

The flange 1 here comprises a broad part and a narrower part which is indicated by 6.

Previously drilled or otherwise made in the flange are four holes, of which in the cross section shown in Fig. 2 only the bores 7 and 8 are shown. In Fig. 2 at the top side of the narrower flange part these bores are drilled out to a recessed shoulder 9, where the bore again has the diameter at the bottom of Fig. 2.

Inserted into this widened part of the bores 7 and 8 are the ends of the pipes 2 and 4 and, of course, into corresponding bores the pipes 3 and 5, until they all come against the recessed shoulder 9.

A plug 10 is then inserted into each bore, at the point where the shoulder 9 is located. This plug must extend on either side of the gap between the shoulder part 9 and the head end of the pipes.

Thereafter this flange with the pipes is placed in a vacuum device in which an electron beam 12 is produced by means of an electron gun 11. This beam initially lies outside the narrowed part 6, above the broader part of the flange, as shown in Figs. 1 and 2. The beam 12 transmitted by the electron gun 11 is directed to the right and the electrons thus move from left to right in the drawing. The electron gun 11 is subsequently moved slowly upwards in the direction of the arrow 14. As soon as the narrowed part 6 of the flange is now touched by the beam 12, a melted zone, indicated by 15 in Fig. 2, will be formed on further movement upwards of the beam 12. This melted zone runs parallel to the top face of the narrower part 6 of the flange 1. In reality, the beam 12 will cause the material at the point of the beam 12 to melt in this narrower part, as a result of which a channel filled with melted material extends through the part 6. However, when the beam moves further this material will set again immediately, because heat is quickly released to the environment of the flange part 6.

The melted zone 15 lies at such a level of the narrower part 6 that the gap between the shoulder 9 of the bore and the end of each of the pipes is completely enclosed by this zone. Thus on either side of the said gap, material will be melted, so that the head end of each of the pipes fuses here with material of the bore wall. So no gap will remain open towards the bore wall.

Once the beam 12 has been passed through the narrower part 6, in Fig. 1 from the bottom to the top, all pipe ends are welded to the bore wall and the desired welded joints are produced.

In order to ensure that when the material of the pipe and of the bore wall melts no melted material flows into the interior, the plug 10 can be inserted into the bore beforehand. The material of the plug 10 then also melts during the passage of the beam, but no material can flow in. The material of the plug 10 will preferably be of the same type as the material of the flange and of the pipes. After the welding, the plug 10 will have to be removed, for example by drilling out. The plug 10 will be preferably completely drilled out, so that the original material of the flange and the pipe again become visible.

In order to facilitate correct positioning of the plug 10, the bores 7 and 8 can also be provided with a shoulder part at the lower end of said plug 10 in Fig. 2. The plug 10 can then be pushed from the top downwards against said shoulder part, following which the end of the pipe 4 is pushed into the round gap between the bore of the flange part 6 and the top end of the plug 10. In that case there are two shoulder parts in each bore, as a result of which the bore undergoes two narrowings from top to bottom. This bore can then, of course, be drilled out if necessary until a surface in line with the inside surface of the pipes 2, 3, 4 and 5 is obtained.

Fig. 1 shows a process in which the beam 12 is moved linearly upwards and remains beaming in the same direction from left to right. Here the electron gun 11 will be moved upwards, but the flange 1 can, of course, also be moved downwards through the beam, in which case the electon gun remains stationary.

However, in another arrangement, the flange 1 can also be rotated through the beam about, for example, the centre point 16 which is on the centre line of the flange. The flange can then, for example, rotate about this point 16 in the direction of the arrow 17 shown at the top left. The beam 12 is then located at the line 18 and remains there.

The pipes 2, 3, 4 and 5 come in turn into the stationary beam 12 during this rotation and are then welded to the bore wall of the flange.

The intensity of the electron beam 12 will preferably be set here in such a way that, looking in Fig. 1 from left to right, past the point of rotation 16 the intensity is insufficient to melt the material of the flange part 6 and the pipes to the right of this point.

At this centre point 16 the material will, of course, be constantly melted by the beam 12, which means that the quantity of melted material here becomes relatively great. This can be seen on the top surface of the flange part 6. This part of the flange part 6, which can also have acquired a different material structure through this melting, is therefore preferably drilled away (see the bore at reference number 19 in Fig. 2). This bore 19 can also be provided before the start of the welding process, in order to prevent overheating.

The speed at which the beam is moved through the material of the flange, or at which the flange rotates through the beam, depends of course on several parameters, such as the thickness of the flange and the pipes, the type of material and the power of the electron beam.

Instead of four pipes, a larger number of pipes can, of course, also be welded to a pipe plate, by the process according to the present invention, with one passage of the electron beam 12. In the case of a round pipe plate, the latter can be rotated again and with, for example, a narrow rectangular linear pipe it can be moved linearly through the beam 12.

Instead of a round narrowed part 6, a rectangular or square flange part can also be used. It can subsequently be separated from the part 1, but the pipes can, of course, also be welded directly to a rectangular coupling part or pipe plate part. In that case the beam will move linearly through the rectangular flat plate part and continue thereby to assume a particular angular position relative to the rectangular coupling part. By the process according to the invention, a large number of pipes can also be fitted between two pipe plates, such as for a heat exchanger.

## Claims

1. Process for the connection by fusion welding of at least one pipe (2–5) to a coupling part (1, 6), such as a plate or flange, where each pipe is inserted over a particular length into a matching bore (7, 8) in the coupling part (1, 6) and in which in a vacuum chamber at least one electron beam (12) is passed through the material of the coupling part (1, 6) and of the wall of the inserted pipe part in a direction essentially at right angles to the longitudinal axis of each inserted pipe part (2–5), characterized in that the electron beam (12) is of an intensity, giving it a penetration depth such that during beam passage at least one complete bore and the inserted pipe is traversed in such a way, that all circumferential adjacent bore wall and pipe wall, passed through by the beam will fuse with one another, while moving the electron beam (12) mainly transversely with respect to the coupling parts (1, 6) and at least one inserted pipe end (2–5).

2. Process according to claim 1, characterized in that prior to welding a plug (10) of suitable fusible material is inserted into the pipe end (2–5) where the weld is to be made and after fusion welding said plug (10) is removed, for example is drilled out.

3. Process according to claims 1 or 2, characterized in that the coupling part (1, 6), at least where the pipe (2–5) has to be connected, is in the form of a flat rectangular block, the pipe (2–5) being inserted through one of the flat block surfaces and that during fusion welding the electron beam (12) is moved through said flat block (6), while passing perpendicularly over one of the block side surfaces and that after welding the block (6) is turned off to a circular shape if necessary.

4. Process according to claims 1 or 2, characterized in that during welding the electron beam (12) and the coupling part (6) with inserted pipe (2–5) are swivelled or rotated relative to one another about a point inside the coupling part not coinciding with a pipe axis of one of the pipes.

5. Process according to claim 4 for welding of several pipe parts (2–5) to a coupling part (1, 6), characterized in that the swivel point or point of rotation is situated between the pipe (2–5).

6. Process according to one of claims 4, 5, characterized in that beyond the said point of swivel or point of rotation the intensity of the electron beam (12) is insufficient to fusion weld the pipe wall part (10) to the adjacent material of the coupling part.

7. Process according to one of the preceding claims, characterized in that prior to fusion welding the pipe (2–5) is inserted into the bore (7, 8) until it abuts a recessed shoulder (9) of the bore (7, 8) which is at right angles to the end face of the pipe (2–5) and that during fusion welding the electron beam (12) passes through the interface of both, the shoulder (9) and the end face of the pipe (2–5), so that the end face of the pipe (2–5) will fuse to the recessed shoulder (9) such as no gap (9) debouching in the bore is left.

## Patentansprüche

1. Verfahren zur Verbindung mindestens eines Rohrs (2–5) mit einem Kupplungsteil (1, 6), etwa einer Platte oder einem Flansch, durch Schmelzschweißen, wobei das Rohr über eine bestimmte Länge in eine passende Bohrung (7, 8) im Kupplungsteil (1, 6) eingeführt wird, und bei welchem in einer Vakuumkammer mindestens ein Elektronenstrahl (12) durch das Material des Kupplungsteils (1, 6) und die Wand des eingeführten Rohrteils in einer Richtung im wesentlichen rechtwinklig zur Längsachse eines jeden eingeführten Rohrteils (2–5) hindurchgeführt wird, dadurch gekennzeichnet, daß der Elektronenstrahl (12) eine solche Intensität aufweist, daß ihm diese eine solche Eindringtiefe gibt, daß während des Durchgangs des Strahls mindestens eine vollständige Bohrung und das eingeführte Rohr auf eine solche Weise durchdrungen wird, daß die gesamte benachbarte Bohrungs-Umfangswand und die Rohrwand, die vom Elektronenstrahl durchdrungen sind, miteinander verschmelzen, während man den Elektronenstrahl (12) hauptsächlich in Querrichtung in bezug auf die Kupplungsteile (1, 6) und mindestens ein eingeführtes Rohrende (2–5) bewegt.

2. Verfahren nach Anspruch 1, dadurch gekennzeichnet, daß vor dem Schweißvorgang ein Stopfen (10) aus geeignetem schmelzbarem Material in das Rohrende (2–5) eingeführt wird, wo die Schweißung vorgenommen werden soll, und daß der Stopfen (10) nach der Schmelzverschweißung entfernt wird, beispielsweise ausgebohrt wird.

3. Verfahren nach Ansprüchen 1 oder 2, dadurch gekennzeichnet, daß das Kupplungsteil (1, 6) mindestens dort, wo das Rohr (2 bis 5) angesetzt werden soll, die Form eines flachen, rechteckigen Blocks aufweist, wobei das Rohr (2–5) durch eine der ebenen Blockflächen eingeführt wird, und daß während des Schmelzschweißens der Elektronenstrahl (12) durch den flachen Block (6) hindurchbewegt wird, während er senkrecht über eine der Block-Seitenflächen hinwegläuft, und daß nach dem Schweißvorgang der Block (6), falls erforderlich, auf eine kreisrunde Form abgedreht wird.

4. Verfahren nach Ansprüchen 1 oder 2, dadurch gekennzeichnet, daß während des Schweißvorganges der Elektronenstrahl (12) und das Kupplungsteil (6) mit dem eingeführten Rohr (2–5) relativ zueinander um einen Punkt im Inneren des Kupplungsteils geschwenkt oder gedreht werden, der nicht mit der Rohrachse eines der Rohre zusammenfällt.

5. Verfahren nach Anspruch 4 zum Verschweißen mehrerer Rohrteile (2–5) mit einem Kupplungsteil (1, 6), dadurch gekennzeichnet, daß der Schwenkpunkt oder der Drehpunkt zwischen den Rohren (2–5) gelegen ist.

6. Verfahren nach einem der Ansprüche 4, 5, dadurch gekennzeichnet, daß jenseits des Schwenkpunktes oder Drehpunktes die Intensität des Elektronenstrahls (12) für die Schmelzverschweißung des Rohrwandteils (10) mit dem benachbarten Material des Kupplungsteils unzureichend ist.

7. Verfahren nach einem der vorangehenden Ansprüche, dadurch gekennzeichnet, daß vor der Schmelzverschweißung das Rohr (2–5) in die Bohrung (7, 8) eingeführt wird, bis es gegen eine abgesetzte Schulter (9) der Bohrung (7, 8) anstößt, die rechtwinklig zur Endfläche des Rohres (2–5) verläuft, und daß während der Schmelzverschweißung der Elektronenstrahl (12) durch die Übergangsfläche sowohl der Schulter (9) als auch der Endfläche des Rohres (2–5) so hindurchdringt, daß die Endfläche des Rohres (2–5) mit der abgesetzten Schulter (9) so verschmilzt, daß kein Spalt (9) verbleibt, der in die Bohrung einmündet.

## Revendications

1. Procédé de connexion par soudage par fusion d'au moins un tube (2–5) sur une pièce d'accouplement (1, 6), telle qu'une plaque ou une bride, où chaque tube est inséré sur une longueur particulière dans un alésage de forme correspondante (7, 8) de la pièce d'accouplement (1, 6) et dans lequel, dans une chambre à vide, un faisceau d'électrons (12) au moins est envoyé à travers le matériau de la pièce d'accouplement (1, 6) et la paroi de la partie insérée du tube dans une direction essentiellement à angle droit par rapport à l'axe longitudinal de chaque partie insérée des tubes (2–5), caractérisé en ce que le faisceau d'électrons (12) possède une intensité lui permettant d'atteindre une profondeur de pénétration telle que pendant le passage du faisceau un alésage complet au moins et le tube inséré à l'intérieur soient traversés de manière que toute la paroi de l'alésage et toute la paroi du tube adjacentes circonférentielles et traversées par le faisceau fondent et se raccordent l'une à l'autre, en déplaçant le faisceau d'électrons (12) principalement transversalement par rapport aux pièces d'accouplement (1, 6) et à moins une extrémité insérée des tubes (2–5).

2. Procédé selon la revendication 1, caractérisé en ce qu'avant le soudage, on insère un bouchon (10) en un matériau fusible approprié dans l'extrémité des tubes (2–5) où la soudure doit être faite, ledit bouchon (10) étant retiré après le soudage par fusion, par exemple en étant éliminé par perçage.

3. Procédé selon la revendication 1 ou 2, caractérisé en ce que la pièce d'accouplement (1, 6), à l'endroit du moins où le tube (2–5) doit être connecté, a la forme d'un bloc rectangulaire plat, le tube (2–5) étant inséré à travers l'une des surfaces du bloc plat et en ce que, pendant le soudage par fusion, le faisceau d'électrons (12) est déplacé transversalement audit bloc plat (6) tout en passant perpendiculairement sur l'une des surfaces latérales du bloc, et en ce qu'après le soudage le bloc (6) est usiné au tour jusqu'à une forme circulaire si cela est nécessaire.

4. Procédé selon la revendication 1 ou 2, caractérisé en ce que pendant le soudage le faisceau d'électrons (12) et la pièce d'accouplement (6) avec le tube (2–5) inséré à l'intérieur, sont pivotés ou entraînés en rotation l'un par rapport à l'autre autour d'un point situé à l'intérieur de la pièce d'accouplement et ne coïncidant pas avec un axe de l'un des tubes.

5. Procédé selon la revendication 4, pour souder plusieurs éléments de tubes (2–5) sur une pièce d'accouplement (1, 6), caractérisé en ce que le point de pivotement ou le point de rotation est situé entre les tubes (2–5).

6. Procédé selon la revendication 4 ou 5, caractérisé en ce qu'au-delà dudit point de pivotement ou dudit point de rotation, l'intensité du faisceau d'électrons (12) est insuffisant pour souder par fusion la partie de paroi (10) du tube au matériau adjacent de la pièce d'accouplement.

7. Procédé selon l'une quelconque des revendications précédentes, caractérisé en ce qu'avant le soudage par fusion, le tube (2–5) est inséré dans l'alésage (7, 8) jusqu'à ce qu'il vienne buter contre un épaulement évidé (9) de l'alésage (7, 8) qui est à angle droit par rapport à la face d'extrémité du tube (2–5), et en ce que pendant le soudage par fusion, le faisceau d'électrons (12) passe par l'interface entre les deux, l'épaulement (9) et la face d'extrémité du tube (2–5), de manière que la face d'extrémité du tube (2–5) fusionne avec l'épaulement évidé (9) de manière que ne subsiste aucun interstice (9) débouchant dans l'alésage.

EP 0 209 922 B1

Fig-1

17
5
4  16  2
18
6
3
1

14
11  12

Fig-2

5
4  2
19
9  6
11  12  9
15
10  10
1
7  8